# EUROPEAN PATENT APPLICATION

(11) **EP 4 716 299 A1**
(43) Date of publication of application: **25.03.2026**
(21) Application number: 24810075.2
(22) Date of filing: 15.04.2024
(51) Int. Cl.: H04W 36/00

(54) **INFORMATION TRANSMISSION METHOD AND APPARATUS, TERMINAL, NETWORK DEVICE, AND READABLE STORAGE MEDIUM**

(30) Priority: 23.05.2023 CN 202310586212
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: XIE, Fang, Beijing 100053 (CN)
(74) Representative: Herrero & Asociados, S.L.
(86) International application number: PCT/CN2024/087813
(87) International publication number: WO 2024/239828

(57) **Abstract**

The present disclosure relates to the technical field of communications. Disclosed are an information transmission = method and apparatus, a terminal, a network device, and a readable storage medium. The method is applied to a terminal, and comprises: sending first information to a network device. The first information is used for indicating information related to conditional handover (CHO) and/or a first operation. The first operation is conditional primary secondary cell addition (CPA) and/or conditional primary secondary cell change (CPC). By means of the described solution, first information used for indicating information related to CHO and/or a first operation is sent to a network device, thereby assisting the network device in the configuration optimization of the CHO and/or the first operation, and reasonably configuring events corresponding to the CHO and the CP A/CPC, thus improving communication reliability.

## Description

### CROSS-REFERENCE TO RELATED APPLICATION

The present disclosure is based on and claims priority of Chinese patent application No. 202310586212.1 filed on May 23, 2023, the entire contents of which are hereby incorporated herein by reference.

### TECHNICAL FIELD

The present disclosure belongs to the technical field of wireless communication, and particularly relates to an information transmission method and device, a UE, a network device, and a readable storage medium.

### BACKGROUND

Due to the joint configuration of Conditional Handover (CHO) and Conditional PSCell Addition (CPA)/Conditional PSCell Change (CPC), a User Equipment (UE) needs to be configured with CHO for a Master Cell Group (MCG) and with CPA or CPC for a Secondary Cell Group (SCG), and the UE can only use dual connectivity in the target cell or base station when both CHO and CPA/CPC take effect. Ideally, the goal of the network configuration is to make the events corresponding to CHO and CPA/CPC be fulfilled simultaneously, so that the UE can use the Primary Secondary Cell (PSCell) for dual connectivity immediately after completing the handover of the Primary Cell (PCell). However, in practice, due to the mobility of the UE and the less-than-optimal network optimization configuration by operators, the events corresponding to CHO and CPA/CPC are likely not fulfilled at the same time. Therefore, how to enable the network to configure reasonable CHO and CPA/CPC events is an urgent problem to be solved.

### SUMMARY

Embodiments of the present disclosure provide an information transmission method and apparatus, a UE, a network device, and a readable storage medium, to assist a network in reasonably configuring events corresponding to CHO and CPA/CPC.

In order to solve the above-described technical problems, a first aspect of the present disclosure provides an information transmission method, which is applied to a user equipment (UE). The method includes sending first information to a network device. The first information is used to indicate information related to a conditional handover (CHO) and/or a first operation, the first operation being conditional PSCell addition (CPA) and/or conditional PSCell change (CPC).

Optionally, the first information includes at least one of the following:
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) includes at least one of:
   at least one event corresponding to the first operation of at least one PSCell or SCG corresponding to the first PCell or the first MCG, which is fulfilled before or when the CHO event(s) for the first PCell or the first MCG is fulfilled; or
   at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

Optionally, the operation of sending the first information to the network device includes:
receiving request information of the network device, wherein the request information is used for the network device to request the UE to send the first information; and
sending the first information to the network device according to the request information.

Optionally, before receiving the request information of the network device, the method further includes:
sending second indication information to the network device, wherein the second indication information is used to indicate that the UE has the first information.

Optionally, the sending the first information to the network device includes:
sending the first information to the network device through a target message,
wherein the target message includes at least one of
a radio resource reestablishment request message, a radio link failure report, or a first information report message

Optionally, before the sending the first information to the network device, the method further includes:
receiving report configuration information of the first information, wherein the report configuration information includes an indication of collecting or recording the first information.

Optionally, the report configuration information further includes a report condition of the first information, wherein the reporting condition includes a threshold of time between fulfilment of the CHO and first operation events.

Optionally, the receiving the report configuration information of the first information includes receiving report configuration information of the first information sent by a network management device, a trace collection entity, or the network device.

A second aspect of the present disclosure further provides an information transmission method, applied to a network device, including: receiving first information sent by a user equipment (UE), wherein the first information is used to indicate information related to Conditional Handover (CHO) and/or a first operation, and the first operation is Conditional Primary and Secondary Cell Addition (CPA) and/or Conditional Primary and Secondary Cell Change (CPC).

Optionally, the first information includes at least one of the following:
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) includes at least one of:
at least one event corresponding to the first operation of at least one PSCell or SCG corresponding to the first PCell or the first MCG, which is fulfilled before or when the CHO event(s) for the first PCell or the first MCG is fulfilled; or
at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

Optionally, the operation of receiving the first information sent by the UE includes:
sending request information to a UE, wherein the request information is used for the network device to request the UE to send the first information; and
receiving the first information sent by the UE according to the request information..

Optionally, before sending the request information to the UE, the method further includes:
receiving second indication information sent by the UE, wherein the second indication information is used to indicate that the UE has the first information.

Optionally, receiving the first information sent by the UE includes:
receiving the first information sent by the UE through a target message,
wherein the target message includes at least one of
a radio resource reestablishment request message, a radio link failure report, or a first information report message. Receiving the first information sent by the UE through a target message;

Optionally, the method further includes:
performing, according to the first information, optimization of configuration of the CHO and/or the first operation.

Optionally, the operation of performing, according to the first information, optimization of configuration of the CHO and/or the first operation includes at least one of:
adjusting at least one parameter of the CHO and/or first operation events according to an order of fulfilment of the CHO and first operation events and/or time between the fulfilment of the CHO and first operation events;
if there is at least one PSCell for which the first operation is triggered before the CHO is triggered, reducing a number of candidate PScells, adjusting a threshold of the event(s) corresponding to the first operation, and/or adjusting a threshold of the event(s) corresponding to the CHO; or
if there is a candidate PCell for which the associated first operation is triggered before the CHO is triggered, adjusting the at least one parameter of the event(s) corresponding to the first operation..

Optionally, the method further includes:
determining a configuration node for the CPC, and sending information related to the CPC in the first information to the configuration node.

A third aspect of an embodiment of the present disclosure provides an information transmission apparatus, applied to a UE, including: a first sending module configured to send first information to a network device, wherein the first information is used to indicate information related to Conditional Handover (CHO) and/or a first operation, and the first operation is Conditional PSCell Addition (CPA)/Conditional PSCell Change (CPC).

A fourth aspect of the present disclosure provides a UE including a transceiver and a processor. The transceiver is configured to send first information to a network device, wherein the first information is used to indicate information related to Conditional Handover (CHO) and/or a first operation, and the first operation is Conditional PSCell Addition (CPA)/Conditional PSCell Change (CPC).

A fifth aspect of the present disclosure provides a UE including a memory, a processor, and a computer program stored in the memory and executable by the processor, and the processor, when executing the program, is configured to implement the information transmission method according to the first aspect.

A sixth aspect of the present disclosure provides an information transmission apparatus, applied to a network device, including: a first receiving module configured to receive first information sent by a UE, wherein the first information is used to indicate information related to Conditional Handover (CHO) and/or a first operation, and the first operation is Conditional PSCell Addition (CPA)/Conditional PSCell Change (CPC).

A seventh aspect of the present disclosure provides a network device comprising a transceiver and a processor; the transceiver is configured to receive first information sent by the UE, wherein the first information is used to indicate information related to Conditional Handover (CHO) and/or a first operation, and the first operation is Conditional PSCell Addition (CPA)/Conditional PSCell Change (CPC).

An eighth aspect of the present disclosure provides a network device including a memory, a processor, and a computer program stored in the memory and executable on the processor, wherein the processor, when executing the program, is configured to implement the steps of the information transmission method described above.

A ninth aspect of the present disclosure provides a readable storage medium having stored thereon a computer program that, when executed by a processor, implements the steps of the method described above.

The present disclosure has a beneficial effect that sending first information for indicating information related to CHO and/or first operation to the network device helps the network device optimize the configuration of the CHO and/or the first operation, and reasonably configure events corresponding to the CHO and the CPA/CPC, thereby improving communication reliability.

### BRIEF DESCRIPTION OF THE DRAWINGS

FIG. 1 is a schematic flow diagram of an information transmission method according to an embodiment of the present disclosure.
FIG. 2 is a schematic flow diagram of another information transmission method according to an embodiment of the present disclosure.
FIG. 3 is a block diagram of an information transmission apparatus according to an embodiment of the present disclosure.
FIG. 4 is a configuration diagram of a UE according to an embodiment of the present disclosure.
FIG. 5 is a block diagram of another information transmission device according to an embodiment of the present disclosure.
FIG. 6 is a diagram of structure of a network device according to an embodiment of the present disclosure.

### DETAILED DESCRIPTION

Hereinafter, the technical solutions in the embodiments of the present disclosure will be clearly and completely described with reference to the drawings in the embodiments of the present disclosure. The described embodiments are some embodiments of the present disclosure, but not all embodiments. Based on the embodiments in the present disclosure, all other embodiments obtained by those skilled in the art without creative work fall within the scope of protection of the present disclosure.

The terms "first," "second," and the like in the specification and claims of the present disclosure are used to distinguish similar objects, and are not used to describe a particular order or sequence. It should be understood that such data used may be interchangeable where appropriate so that embodiments of the present disclosure can be implemented in an order other than those illustrated or described herein, and that objects distinguished by "first", "second", etc. are generally one class, and the number of objects is not limited, for example, the first object may be one or a plurality of objects. In addition, "and/or" in the specification and claims indicates at least one of the connected objects, and the character "/" generally indicates that the related objects before and after are in an "or" relationship.

Hereinafter, related art related to the present disclosure will be described as follows.

CHO is a mechanism to enhance the robustness of handover. In order to solve the problem that a channel between a UE and a serving cell suddenly deteriorates (for example, in high-speed moving or high-frequency scenarios), which causes the UE to fail to complete the handover process normally, a base station may configure the UE to trigger a measurement report at a low threshold, and carry a high threshold for triggering the handover, such as A3 or A5 events, in a CHO command, which may also carry random access resources used by the UE in a target cell. Once the handover event(s) is fulfilled, the UE initiates a random access procedure to the target cell. The source base station may configure the UE with conditional handover for a plurality of target cells.

Similarly, in the dual connectivity scenario, for Conditional PSCell Addition (CPA) and Conditional PSCell Change (CPC), the network-side device configures information to the User Equipment (UE) in advance. The network-side device may include a Master Node (MN) (for CPA) and a Secondary Node (SN) (for CPC). The information configuration may include the following: cell identifiers of one or more candidate Primary Secondary Cells (PSCells); events for corresponding conditional addition or change (e.g., one or two events among Event A3, Event A4, and Event A5); a Cell Radio Network Temporary Identifier (C-RNTI) used by the UE in the candidate PSCell; and dedicated random access resources. When the UE evaluates that a candidate PSCell meets the trigger condition, it adds the candidate PSCell or changes the target cell to the candidate PSCell.

In order to enable the UE to quickly use dual connectivity after a primary cell group (MCG) handover and improve the data rate of the UE, a mechanism is proposed to jointly configure CHO for the MCG (or PCell) and CPA/CPC for a secondary cell group (SCG) (or PSCell) for the UE. Further, in order to improve the effectiveness of dual connectivity and avoid unnecessary CPA/CPC operations, the UE does not perform CPA/CPC operations before the CHO for the MCG is triggered (or the CHO configuration for the MCG is applied). However, in order to quickly enable the UE to apply dual connectivity, evaluation of candidate PCells for the CHO operation and evaluation of candidate PSCells for the CPA/CPC operation may be performed simultaneously.

Hereinafter, an information transmission method and apparatus, a UE, a network device, and a readable storage medium according to embodiment of the present disclosure will be described in detail with reference to specific embodiments and application scenarios thereof with reference to the drawings.

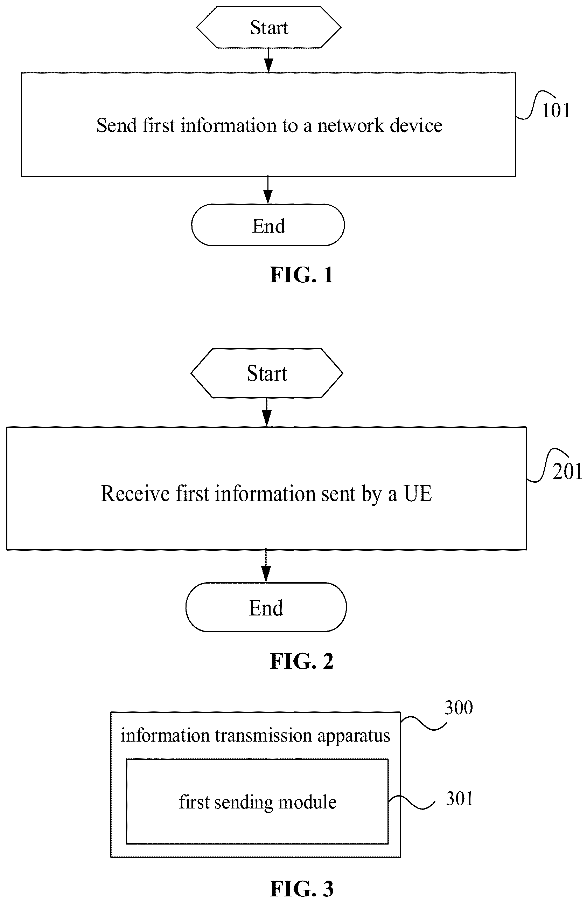

As shown in FIG. 1, at least one embodiment of the present disclosure provides an information transmission method applied to a UE. The method includes step 101.

At step 101, first information is sendted to the network device. The first information is used to indicate information related to Conditional Handover and/or a first operation. The first operation is conditional PSCell addition (CPA) and/or conditional PSCell change (CPC).

Optionally, the first information is used for the network device to optimize a target parameter(s) corresponding to the CHO and/or the first operation, and the target parameter includes a trigger event(s) and/or a parameter(s) corresponding to the trigger event(s).

For example, the trigger event(s) includes, but is not limited to, at least one of the A3, A5, or B1 events. For example, the parameter(s) corresponding to the trigger event(s) may include an offset a3-Offset, a hysteresis, and a time to trigger (TimeToTrigger, TTT) corresponding to the A3 event, a threshold a5-Threshold1, a5-Threshold2, a hysteresis, and a TTT corresponding to the A5 event, and the like.

In one implementation, the first information includes at least one of the following A101 to A113.

A101, an order of fulfilment of the CHO and first operation events.

It should be noted that the order of fulfilment of the CHO event(s) and the first operation event(s) may include at least one of the following: the CHO event(s) is fulfilled first, the event(s) that is fulfilled first is the CHO event(s), the first operation event(s) is fulfilled first, the event(s) that is fulfilled first is the first operation event(s), the CHO event(s) is fulfilled later, the event(s) that is fulfilled later is the CHO event(s), the first operation event(s) is fulfilled later, and the event(s) that is fulfilled later is the first operation event(s).

It should be noted that the " fulfilment of an event(s)" mentioned in the embodiments of the present disclosure can also be described or expressed as "event triggering". For example, the fulfilment of an CHO event(s) is equivalent to triggering of the CHO event(s). The PSCell (or SCG) corresponding to the first operation and the PCell (or MCG) corresponding to CHO may have an association relationship (i.e., the PSCell and the PCell jointly provide dual connectivity services for the UE) or may not have an association relationship (i.e., the PSCell and another PCell jointly provide dual connectivity services for the UE).

The PCell mentioned in the embodiments of the present disclosure can be described or expressed using MCG, and the PSCell can be described or expressed using SCG.

A102: time between fulfilment of the CHO and first operation events.

It should be noted that this time difference refers to a difference between the time when the CHO event(s) is fulfilled and the time when the first operation event(s) is fulfilled. For example, the time difference may be in seconds, milliseconds, slots, sub-slots, Orthogonal Frequency Division Multiplexing (OFDM) symbols, etc. The PSCell (or SCG) corresponding to the first operation and the PCell (or MCG) corresponding to CHO may have an association relationship (i.e., the PSCell and the PCell jointly provide dual connectivity services for the UE) or may not have an association relationship (i.e., the PSCell and another PCell jointly provide dual connectivity services for the UE).

For example, if the CHO event(s) of PCell 1 is fulfilled first, and the CPA or CPC event(s) for PSCell 2 is fulfilled later, the time difference refers to a difference between the time when the CHO event(s) for PCell 1 is fulfilled and the time when the CPA or CPC event(s) for PSCell 2 is fulfilled.

A103: one or more target events(s).

Optionally, the target event(s)(s) include(s) at least one of A1031 to A1032 below.

A1031: at least one event corresponding to a first operation of at least one PSCell or SCG corresponding to the first PCell or the first MCG, which is fulfilled before or when the CHO event(s) of the first PCell or the first MCG is fulfilled;
It should be noted that the first PCell refers to a target cell for which the CHO event(s) is fulfilled, and may also be called a candidate PCell; the first MCG refers to a cell group to which the target cell for which the CHO event(s) is fulfilled belongs, and may also be called a candidate MCG.

For example, this case can be understood as follows: the target event(s) is at least one event corresponding to CPA and/or CPC of at least one PSCell or SCG corresponding to the first PCell or the first MCG, which is fulfilled before the CHO event(s) of the first PCell or the first MCG is fulfilled. Alternatively, the target event(s) is at least one event corresponding to CPA and/or CPC of at least one PSCell or SCG corresponding to the first PCell or the first MCG, which is fulfilled when the CHO event(s) of the first PCell or the first MCG is fulfilled.

It should be noted that "at least one PSCell or SCG corresponding to the first PCell or the first MCG" can also be understood as "at least one PSCell or SCG associated with the first PCell or the first MCG". That is to say, one PCell corresponds to or is associated with one or more PSCells, and one MCG corresponds to or is associated with one or more SCGs.

For example, if the primary cell accessed by the UE after CHO occurs, or the primary cell where the UE first undergoes CHO, is Cell 1, and before the CHO event(s) of Cell 1 is fulfilled, the event(s) corresponding to CPA or CPC of PSCell 2 is fulfilled (where PSCell 2 is a candidate PSCell associated with Cell 1), the UE needs to record the event(s) corresponding to CPA or CPC of PSCell 2.

A1032: at least one event corresponding to the first operation of a PSCell or SCG, which is fulfilled before or when the CHO event(s) of the first PCell or the first MCG is fulfilled, and the PSCell or SCG for the first operation that is fulfilled corresponds to the second PCell or the second MCG.

It should be noted that the second PCell refers to a target cell for which the CHO event(s) is not fulfilled, and can be understood as a candidate PCell for the UE. The second MCG refers to a cell group to which the target cell (for which the CHO event(s) is not fulfilled) belongs, and may also be called a candidate MCG.

It should be noted here that the first PCell and the second PCell are different cells, which can be understood as follows: the first PCell is a target PCell for which the CHO event(s) is fulfilled first, while the second PCell(s) refer(s) to other target PCell(s) than the first target PCell for which the CHO event(s) is fulfilled. For example, if three target PCells (PCell A, PCell B, and PCell C) are configured for the UE, and PCell C is the first cell for which the CHO event(s) is fulfilled, then PCell C is the first PCell, and PCell A and PCell B are the second PCells.

For example, this case can be understood as follows: the target event(s) is at least one event corresponding to CPA and/or CPC of candidate PSCell(s) or candidate SCG(s) corresponding to other PCell(s) or other MCG(s) than the first PCell or the first MCG, which is fulfilled before the CHO event(s) of the first PCell or the first MCG is fulfilled. Alternatively, the target event(s) is at least one event corresponding to CPA and/or CPC of candidate PSC(s) or candidate SCG(s) corresponding to other PCell(s) or other MCG(s) than the first PCell or the first MCG, which is fulfilled when the CHO event(s) of the first PCell or the first MCG is fulfilled.

For example, if the primary cell accessed by the UE after CHO occurs, or the primary cell where the UE first undergoes CHO, is Cell 1, and before the CHO event(s) of Cell 1 is fulfilled, the event(s) corresponding to CPA or CPC of PSCell 3 is fulfilled (where PSCell 3 is a candidate PSCell corresponding to a PCell other than Cell 1), the UE needs to record the event(s) corresponding to CPA of PSCell 3.

A104: identification information of at least one candidate PSCell corresponding to the target event(s).

For example, the identification information may be a cell ID (e.g., a Physical Cell Identifier (PCI) or a New Radio Cell Global Identifier (NCGI)) or an index corresponding to the cell.

Typically, this case applies to A1031 and A1032 mentioned above.

A105: identification information of the candidate PCell corresponding to the target event(s). For example, the identification information may be a cell ID (e.g. a PCI or an NCGI) or an index corresponding to the cell.

Typically, this case applies to A1031 and A1032 mentioned above.

A106: an order in which the target event(s)(s) is/are fulfilled.

Optionally, the order may refer to an order in which event(s) of one or more PSCells (or SCGs) associated with the PCell (or MCG)-for which the CHO event(s) is fulfilled or triggered-are fulfilled or triggered. For example, before or when the CHO event(s) for PCell 1 is fulfilled, the events corresponding to CPA or CPC of PSCell 2, PSCell 3, and PSCell 4 (all associated with PCell 1) are also fulfilled either sequentially or simultaneously (e.g., the CPA or CPC events of PSCell 3 and PSCell 4 are fulfilled simultaneously). In this case, the order of fulfilment of target events is: the CPA or CPC event(s) for PSCell 2, the CPA or CPC event(s) for PSCell 3, and the CPA or CPC event(s) for PSCell 4.

Optionally, the order may refer to an order in which events of one or more PSCells (or SCGs) not associated with the PCell (or MCG)-for which the CHO event(s) is fulfilled or triggered-are fulfilled or triggered. For example, before or when the CHO event(s) for PCell 1 is fulfilled, the CPA or CPC events of PSCell 5 and PSCell 6 (both associated with PCell 2) are fulfilled sequentially. The order of fulfilment of target events is: the CPA or CPC event(s) for PSCell 5, and the CPA or CPC event(s) for PSCell 6. For another example, before or when the CHO event(s) for PCell 1 is fulfilled, the CPA or CPC events of PSCell 5 and PSCell 6 (associated with PCell 2) are fulfilled sequentially, and the CPA or CPC event(s) for PSCell 7 (associated with PCell 3) is fulfilled. The order of fulfilment of target events is: the CPA or CPC event(s) for PSCell 5, the CPA or CPC event(s) for PSCell 6, and the CPA or CPC event(s) for PSCell 7.

Optionally, the order may refer to an order in which events of one or more PSCells (or SCGs)-either associated or not associated with the PCell (or MCG) for which the CHO event(s) is fulfilled or triggered-are fulfilled or triggered. For example, before or when the CHO event(s) for PCell 1 is fulfilled, the CPA or CPC events of PSCell 2, PSCell 3, and PSCell 4 (associated with PCell 1) are fulfilled either sequentially or simultaneously (e.g., the CPA or CPC events of PSCell 3 and PSCell 4 are fulfilled simultaneously); the CPA or CPC events of PSCell 5 and PSCell 6 (associated with PCell 2) are fulfilled sequentially; and the fulfilment of the CPA or CPC event(s) for PSCell 5 occurs before the fulfilment of the CPA or CPC event(s) for PSCell 3. In this case, the order of fulfilment of target events is: the CPA or CPC event(s) for PSCell 2, the CPA or CPC event(s) for PSCell 5, the CPA or CPC event(s) for PSCell 3, the CPA or CPC event(s) for PSCell 4, and the CPA or CPC event(s) for PSCell 6.

A107: time between fulfilment of the target events.

Taking the order of fulfilment of the target event(s)s in A106 mentioned above (i.e., the CPA or CPC event(s) for PSCell 2, the CPA or CPC event(s) for PSCell 3, and the CPA or CPC event(s) for PSCell 4) as an example, the time difference may refer to a time difference relative to the time when the earliest event is fulfilled. For instance, the time differences include: a difference obtained by (time when the CPA/CPC event(s) for PSCell 3 is fulfilled) - (time when the CPA/CPC event(s) for PSCell 2 is fulfilled), and/or a difference obtained by (time when the CPA/CPC event(s) for PSCell 4 is fulfilled) - (time when the CPA/CPC event(s) for PSCell 2 is fulfilled). Alternatively, the time difference may refer to time between fulfilment of successive events of two cells. For instance, the time differences include: a difference obtained by (time when the CPA/CPC event(s) for PSCell 3 is fulfilled) - (time when the CPA/CPC event(s) for PSCell 2 is fulfilled), and/or (time when the CPA/CPC event(s) for PSCell 4 is fulfilled) - (time when the CPA/CPC event(s) for PSCell 3 is fulfilled).

A108: time between fulfilment of the target event(s) and the CHO event(s) for the first PCell or the first MCG.

Taking the order of fulfilment of the target event(s)s in A106 mentioned above (i.e., the CPA or CPC event(s) for PSCell 2, the CPA or CPC event(s) for PSCell 3, and the CPA or CPC event(s) for PSCell 4) as an example, the CHO event(s) for PCell 1 is fulfilled. In this case, the time difference refers to a difference obtained by (time when the CHO event(s) for PCell 1 is fulfilled) - (time when the CPA/CPC event(s) for PSCell 2 is fulfilled), and/or a difference obtained by (time when the CHO event(s) for PCell 1 is fulfilled) - (time when the CPA/CPC event(s) for PSCell 3 is fulfilled), and/or a difference obtained by (time when the CHO event(s) for PCell 1 is fulfilled) - (time when the CHO event(s) for PSCell 4 is fulfilled); or a difference obtained by (time when the CPA/CPC event(s) for PSCell 2 is fulfilled) - (time when CHO event(s) for PCell 1 is fulfilled), and/or (time when the CPA/CPC event(s) for PSCell 3 is fulfilled) - (time when the CHO event(s) for PCell 1 is fulfilled), and/or (time when the CPA/CPC event(s) for PSCell 4 is fulfilled) - (time when the CHO event(s) for PCell 1 is fulfilled).

A109: first indication information, where the first indication information is used to indicate that fulfilment of the target event(s).

A110: a cell identifier of a candidate PCell corresponding to CHO.

A111: a cell identifier of a candidate PSCell corresponding to the first operation.

A112: event(s) corresponding to the fulfilment of CHO and/or the fulfilment of the first operation.

Optionally, such event(s) include(s) event A3, event A5, event B1, etc. Typically, in such cases, parameters corresponding to the events are also required. For example, the parameters may include an offset corresponding to event A3, a threshold and TTT corresponding to event A5, and so on.

It should be noted that since the network side does not store the specific information of the previously configured joint configuration for the UE, reporting such information by the UE can help the network side know the previous configuration and facilitate the optimization of the configuration.

A113: The configuration node for CPC.

Optionally, the configuration node may be a Master Node (MN) or a Secondary Node (SN).

It should be noted here that the configuration node for CHO and CPA can only be the MN.

should be noted that the "correspondence" mentioned in the above description can also be described using "association". For example, the alternative description of "identification information of at least one candidate Primary Secondary Cell (PSCell) corresponding to the target event(s)" is: identification information of at least one candidate PSCell associated with the target event(s). For another example, the alternative description of "the event(s) corresponding to the fulfilment of Conditional Handover (CHO) and/or the fulfilment of the first operation" is: the event(s) associated with the fulfilment of CHO and/or the fulfilment of the first operation.

There is an association or correspondence relationship between the candidate PCell or MCG for CHO and the candidate PSCell or SCG for CAP/CPC. That is, one candidate PCell or MCG is associated with or corresponds to at least one candidate PSCell or SCG.

It should be noted that the first information may be proactively reported by the UE; or the first information may be reported by the UE based on a request from the network side. In one implementation, the specific implementation of sending the first information to the network device includes:

receiving request information from the network device, where the request information is used by the network device to request the UE to send the first information; and sending the first information to the network device according to the request information.

In other words, when the network device needs to optimize the target parameter(s) corresponding to CHO and/or the first operation, it needs to send a request to the UE to enable the UE to report the first information. This ensures that the first information is reported on demand, avoiding the problem of unnecessary signaling overhead caused by the UE reporting invalid information.

In one implementation, before receiving the request information from the network device, the method further includes:
sending second indication information to the network device, where the second indication information is used to indicate that the UE has the first information.

This can be understood as follows: when the network device intends to request the first information from the UE, it first needs to know whether the UE has the first information. Only when the UE has the first information will the network device request the first information from the UE, thereby avoiding signaling waste.

In one implementation, sending the first information to the network device includes at least one of the following:
sending the first information to the network device via a target message;
where the target message includes at least one of B11 to B13 below.
B11: Radio Resource Reestablishment Request message;

It should be noted that the UE may carry the first information in the Radio Resource Reestablishment Request message.

### B12: Radio Link Failure Report;

It should be noted that the UE may carry the first information in the Radio Link Failure Report.

The aforementioned B11 and B12 can be understood as the UE reporting the first information based on the existing message(s).

### B13: first Information reporting message;

It should be noted that this case involves introducing a newly defined message (e.g., a newly defined Radio Resource Control (RRC) message), which is dedicated to reporting the first information.

In one implementation, before sending the first information to the network device, the method further includes: receiving report configuration information for the first information, where the report configuration information includes an indication of collecting or recording the first information.

This case can be understood as follows: the type of information that the UE needs to collect is configured by the network side. For example, the report configuration information includes an indication of collecting one or more items among the aforementioned A101 to A113. The UE needs to obtain the corresponding first information based on the indication from the network side.

In one implementation, the report configuration information further includes: a report condition for the first information, where the report condition includes a threshold of time between fulfilment of the CHO event(s) and the fulfilment of the first operation event(s). The report condition can be understood as a threshold requirement that must be met for reporting the first information.

For example, if an actual time between the triggering or fulfilment of the UE's CHO event(s) and CPA/CPC event is greater than or equal to the threshold, the UE needs to record the aforementioned information; otherwise, there is no need to record it. This is because a small time difference indicates that the interval between the triggering of the CHO event(s) and the triggering of the CPA/CPC event(s) is short (and thus does not require optimization).

Optionally, the specific implementation of receiving the report configuration information for the first information includes: receiving the report configuration information for the first information sent by a network management device, a Trace Collection Entity (TCE), or a network device.

It should be noted that the network device may be a Master Node (MN) or a Secondary Node (SN).

Further, after receiving the first information, the network device optimizes the configuration of CHO and/or the first operation based on the first information.

In one implementation, the operation of optimizing the configuration of CHO and/or the first operation based on the first information includes at least one of C11 to C13 below.

C11: adjusting the parameter(s) of the event(s) corresponding to CHO and/or the first operation according to the order and/or time between fulfilment of the CHO and first operation events.

It should be noted that in this case, the event(s) or corresponding parameter(s) are adjusted to modify the trigger timing of specific event(s), ensuring that one event is triggered earlier or later than another event.

For example, if CHO is triggered first, and the time between the triggering of CHO and the triggering of CPA (or CPC) is large (this time difference may be a time threshold derived by the operator based on actual operation experience, such as 30 seconds), this indicates that CPA (or CPC) is executed too late, and the UE can only use dual connectivity long after handover. In this case, the network side needs to adjust the event(s) that triggers CPA (or CPC) and/or its corresponding threshold (e.g., lowering the offset parameter of event A3, increasing the parameter a5-Threshold1 of event A5, lowering a5-Threshold2, and lowering the TTT for triggering CHO), so that the CPA (or CPC) operation is executed or triggered earlier. Alternatively or additionally, the network side adjusts the threshold for triggering CHO to delay the triggering of CHO, enabling the triggering of CHO to be synchronized with the triggering of CPA (or CPC) as much as possible.

For another example, if CPA (or CPC) is triggered first, and the time between the triggering of CHO and the triggering of CPA (or CPC) is large, this indicates that CPA (or CPC) is executed too early or CHO is executed too late. In such cases, the PSCell that previously fulfilled the CPA (or CPC) condition may quickly become unavailable after PCell handover of the UE (since the coverage area of the SCG is relatively small). The network side adjusts the threshold for triggering CHO (e.g., lowering the a3-Offset of event A3, increasing the a5-Threshold1 of event A5, lowering a5-Threshold2, and lowering the TTT for triggering CHO) to advance the triggering of CHO, enabling it to be synchronized with the triggering of CPA (or CPC) as much as possible. Alternatively, the network side adjusts the event that triggers CPA (or CPC) and/or corresponding threshold (e.g., increasing the a3-Offset of event A3, lowering the a5-Threshold1 of event A5, increasing a5-Threshold2) and increases the TTT for triggering CPA/CPC, so that the CPA (or CPC) operation is executed or triggered later to achieve synchronization/coordination with CHO triggering.

C12: if the first operation of at least one PSCell is triggered before CHO is triggered, reducing the number of candidate PSCells, adjusting the threshold of the event(s) corresponding to the first operation, and/or adjusting the threshold of the event(s) corresponding to CHO.

It should be noted that if the first operation of at least one PSCell is triggered before CHO is triggered, this indicates that CHO is triggered too late. Alternatively, it can be understood that the first operation of the corresponding PSCell is executed too early, or an excessive number of candidate PSCs are configured. In this case, it is necessary to adjust the threshold of the event(s) corresponding to CHO to advance the triggering of CHO; and/or, reduce the number of candidate PSCells. If the time between the fulfilment of multiple CPA/CPC events is very small, it means there is no need to configure so many candidate PSCs-only the last PSCell of which fulfilment time is closest to that of CHO needs to be retained. For example, the PSCell for which the first operation is triggered may not be configured as a candidate PSCell, and/or adjust the threshold of the event(s) corresponding to the first operation to advance the triggering of CHO as much as possible or delay the triggering of the first operation.

C13: if the first operation associated with a candidate PCell is triggered before CHO is triggered, adjusting the parameter(s) of the event(s) corresponding to the first operation.

It should be noted that if the first operation associated with another candidate PCell (i.e., a PCell other than the first target PCell for which the CHO event(s) is fulfilled) is triggered before CHO is triggered, this indicates that the CPA and/or CPC associated with the another candidate PCell is triggered too early. In this case, it is necessary to adjust the parameter(s) of the event(s) corresponding to CPA and/or CPC to delay the triggering of CPA and/or CPC as much as possible, or to advance the triggering of CHO (e.g., advancing the triggering of CHO for the candidate PCell associated with the first operation).

In one implementation, the network device further needs to determine the configuration node for CPC, and send the CPC-related information in the first information to the configuration node, so that the configuration node can optimize the relevant configuration parameter(s).

It should be noted that this case is mainly applicable when the network device receiving the first information is inconsistent with the CPC configuration node. For example, the network device receiving the first information is an MN, while the CPC configuration node is an SN; or the network device receiving the first information is an SN, while the CPC configuration node is an MN.

In summary, the embodiments of the present disclosure propose that the UE reports information such as the sequence of fulfilment of the CHO event(s) and CPA (and/or CPC) event(s) and a time difference thereof, and configured event(s). This helps the network side optimize the event(s) corresponding to CHO and CPA (and/or CPC), and/or corresponding parameters, thereby improving communication reliability.

As shown in FIG. 2, at least one embodiment of the present disclosure provides an information transmission method, which is applied to a network device, and the method includes operation 201.

In operation 201, first information sent by the UE is received. The first information is used to indicate information related to CHO and/or a first operation; the first operation is CPA and/or CPC.

Optionally, the first information includes at least one of the following:
an order of fulfilment of the CHO and first operation events;
time between fulfilment of the CHO and first operation events;
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;

Here, the target event(s) includes at least one of:
at least one event corresponding to the first operation of at least one PSCell or SCG corresponding to the first PCell or the first MCG, which is fulfilled before or when the CHO event(s) for the first PCell or the first MCG is fulfilled; or
at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

Optionally, the operation of receiving the first information sent by the UE includes:
sending request information to a UE, wherein the request information is used for the network device to request the UE to send the first information;
receiving the first information sent by the UE according to the request information.

Optionally, before sending the request information to the UE, the method further includes:
receiving second indication information sent by the UE, wherein the second indication information is used to indicate that the UE has the first information.

Optionally, the operation of receiving the first information sent by the UE includes at least one of the following:
receiving the first information sent by the UE through a target message;

The target message includes at least one of:
a radio resource reestablishment request message, a radio link failure report, and a first information report message.

Optionally, the method further includes:
performing optimization of configuration of the CHO and/or the first operation according to the first information.

Optionally, the operation of performing optimization of configuration of the CHO and/or the first operation according to the first information includes:
adjusting at least one parameter of the CHO and/or first operation events according to an order of fulfilment of the CHO and first operation events and/or time between the fulfilment of the CHO and first operation events;
if there is at least one PSCell for which the first operation is triggered before the CHO is triggered, reducing a number of candidate PScells, adjusting a threshold of the event(s) corresponding to the first operation, and/or adjusting a threshold of the event(s) corresponding to the CHO; or
if there is a candidate PCell for which the associated first operation is triggered before the CHO is triggered, adjusting the at least one parameter of the event(s) corresponding to the first operation.

Optionally, the method further includes:
determining a configuration node for the CPC, and send the CPC-related information in the first information to the configuration node.

It should be noted that all descriptions related to the network device side in the above embodiments are applicable to the embodiments of the information transmission method applied to the network device side, and can also achieve the same technical effects, which will not be repeated here.

As shown in FIG. 3, at least one embodiment of the present disclosure further provides an information transmission apparatus 300 applied to a UE, and includes: a first sending module 301 configured to send first information to a network device, wherein the first information is used to indicate information related to CHO and/or a first operation. The first operation is: conditional PSCells add CPA and/or conditional PSCells change CPC.

Optionally, the first information includes at least one of the following:
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) includes at least one of:
   at least one event corresponding to the first operation of at least one PSCell or SCG corresponding to the first PCell or the first MCG, which is fulfilled before or when the CHO event(s) for the first PCell or the first MCG is fulfilled; or
   at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

Optionally, the first sending module 301 includes: a first receiving unit configured to receive request information of the network device, wherein the request information is used for the network device to request a UE to send the first information; and a first sending unit configured to send the first information to the network device according to the request information.

Optionally, before the receiving unit receives the request information of the network device, the first sending module 301 further includes a second sending unit configured to send second indication information to the network device, wherein the second indication information is used to indicate that the UE has the first information.

Optionally, the first sending module 301 is configured to send the first information to the network device through a target message, wherein the target message includes at least one of: a radio resource reestablishment request message, a radio link failure report, or a first information report message.

Optionally, before the first sending module 301 sends the first information to the network device, the first sending module 301 further includes: a second receiving module configured to receive report configuration information of the first information, and the report configuration information includes an indication of collecting or recording the first information.

Optionally, the report configuration information further includes a report condition of the first information, wherein the report condition includes a threshold of time between fulfilment of the CHO and first operation events.

Optionally, the second receiving module is configured to receive report configuration information of the first information sent by a network management device, a TCE, or the network device.

At least one embodiment of the present disclosure further provides a UE including a transceiver and a processor. The transceiver is configured to send first information to a network device, wherein the first information is used to indicate information related to CHO and/or a first operation; the first operation is: CPA and/or CPC.

Optionally, the first information includes at least one of the following:
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) includes at least one of:
   at least one event corresponding to the first operation of at least one PSCell or SCG corresponding to the first PCell or the first MCG, which is fulfilled before or when the CHO event(s) for the first PCell or the first MCG is fulfilled; or
   at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

Optionally, the transceiver is configured to: receive request information of the network device, wherein the request information is used for the network device to request a UE to send the first information; and send the first information to the network device according to the request information.

Optionally, the transceiver is further configured to send second indication information to the network device, wherein the second indication information is configured to indicate that the UE has the first information.

Optionally, the transceiver is configured to send the first information to the network device through a target message, wherein the target message includes at least one of a radio resource reestablishment request message, a radio link failure report, and a first information report message.

Optionally, the transceiver is further configured to receive report configuration information of the first information, and the report configuration information includes an indication of collecting or recording the first information.

Optionally, the report configuration information further includes a report condition of the first information, wherein the report condition includes a threshold of time between fulfilment of the CHO and first operation events.

Optionally, the transceiver is configured to receive report configuration information of the first information sent by a network management device, a TCE, or the network device.

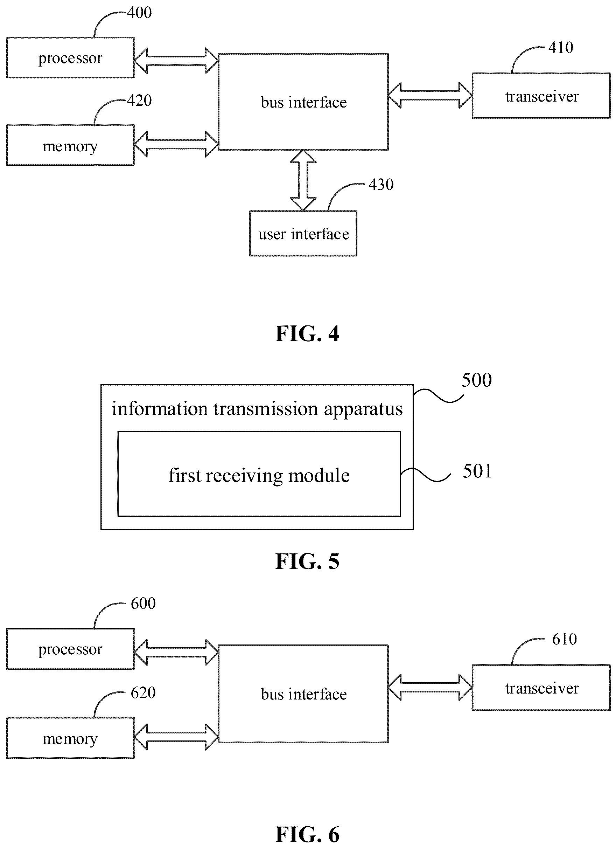

As shown in FIG. 4, an embodiment of the present disclosure further provides a UE including a processor 400, a transceiver 410, a memory 420, and a program stored in the memory 420 and executable by the processor 400. The transceiver 410 is connected to the processor 400 and the memory 420 through a bus interface. The processor 400 is configured to read the program in the memory and perform the following process: sending the first information to the network device through the transceiver 410. The first information is used to indicate information related to the CHO and/or the first operation. The first operation is: CPA and/or CPC.

The transceiver 410 is configured to receive and send data under the control of the processor 400.

In FIG. 4, the bus architecture may include any number of interconnected buses and bridges, specifically linked together by one or more processors represented by processor 400 and various circuits of memory represented by memory 420. The bus architecture may also link together various other circuits, such as peripherals, voltage regulators, and power management circuits, which are well known in the art and, therefore, will not be further described herein. The bus interface provides interfaces. The transceiver 410 may be a plurality of elements, i.e., including a sendter and a receiver, providing means for communicating with various other devices over transmission media including wireless channels, wired channels, optical cables, and the like.

The processor 400 is responsible for managing the bus architecture and general processing, and the memory 420 may store data used by the processor 400 in performing operations. For different user devices, the user interface 430 may also be an interface capable of externally and internally connecting required devices, including but not limited to a keypad, a display, a speaker, a microphone, a joystick, and the like.

Optionally, the processor 400 may be a CPU (Central Processing Unit), an ASIC (Application Specific Integrated Circuit), an FPGA (Field-Programmable Gate Array), or a CPLD (Complex Programmable Logic Device), and the processor may also adopt a multi-core architecture.

By calling the computer program stored in the memory, the processor is configured to execute any of the methods according to the embodiments of the present disclosure according to the obtained executable instructions. The processor and the memory may also be physically arranged separately.

Optionally, the first information includes at least one of the following:
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) includes at least one of:
   at least one event corresponding to the first operation of at least one PSCell or SCG corresponding to the first PCell or the first MCG, which is fulfilled before or when the CHO event(s) for the first PCell or the first MCG is fulfilled; or
   at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

Optionally, the processor 400 is configured to read a program in the memory, to enable the transceiver 410 to receive request information of the network device, wherein the request information is used for the network device to request a UE to send the first information; and send the first information to the network device according to the request information.

Optionally, the processor 400 is configured to read the program in the memory, to enable the transceiver 410 to send second indication information to the network device, wherein the second indication information is configured to indicate that the UE has the first information.

Optionally, the processor 400 is configured to read the program in the memory, to enable the transceiver 410 to send the first information to the network device through a target message, wherein the target message includes at least one of a radio resource reestablishment request message, a radio link failure report, or a first information report message.

Optionally, the processor 400 is configured to read the program in the memory, to enable the transceiver 410 to receive report configuration information of the first information, wherein the report configuration information includes an indication of collecting or recording the first information.

Optionally, the report configuration information further includes a report condition of the first information, wherein the report condition includes a threshold of time between fulfilment of the CHO and first operation events.

Optionally, the processor 400 is configured to read the program in the memory to enable the transceiver 410 to receive the report configuration information of the first information sent by a network management device, a TCE, or the network device.

At least one embodiment of the present disclosure further provides a UE, which includes a memory, a processor, and a computer program stored in the memory and executable by the processor. When the processor executes the program, each process in the embodiment of the information transmission method can be realized and the same technical effect can be achieved, and the description thereof will not be repeated herein in order to avoid repetition.

As shown in FIG. 5, at least one embodiment of the present disclosure further provides an information transmission apparatus 500 applied to a network device, including: a first receiving module 501 configured to receive first information sent by a UE, wherein the first information is used to indicate information related to CHO and/or a first operation; The first operation is: CPA and/or CPC.

Optionally, the first information includes at least one of the following:
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) includes at least one of:
   at least one event corresponding to the first operation of at least one PSCell or SCG corresponding to the first PCell or the first MCG, which is fulfilled before or when the CHO event(s) for the first PCell or the first MCG is fulfilled; or
   at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

Optionally, the first receiving module 501 includes: a third sending unit configured to send request information to a UE, wherein the request information is used for the network device to request the UE to send the first information; and a second receiving unit configured to receive the first information sent by the UE according to the request information.

Optionally, before the third sending unit sends the request information to the UE, the first receiving module 501 further includes a third receiving unit configured to receive second indication information sent by the UE, wherein the second indication information is configured to indicate that the UE has the first information.

Optionally, the first receiving module 501 is configured to receive the first information sent by the UE through a target message, wherein the target message includes at least one of: a radio resource reestablishment request message, a radio link failure report, or a first information reporting message.

Optionally, the apparatus further includes an execution module configured to perform optimization of configuration of the CHO and/or the first operation according to the first information.

Optionally, the execution module is configured to implement at least one of: adjusting at least one parameter of the CHO and/or first operation events according to an order of fulfilment of the CHO and first operation events and/or time between the fulfilment of the CHO and first operation events; if there is at least one PSCell for which the first operation is triggered before the CHO is triggered, reducing a number of candidate PScells, adjusting a threshold of the event(s) corresponding to the first operation, and/or adjusting a threshold of the event(s) corresponding to the CHO; or if there is a candidate PCell for which the associated first operation is triggered before the CHO is triggered, adjusting the at least one parameter of the event(s) corresponding to the first operation.

Optionally, the apparatus further includes a determining module configured to determine a configuration node for the CPC, and send information related to the CPC in the first information to the configuration node.

It should be noted that, if the device according to at least one embodiment of the present disclosure is a device capable of executing the above-described information transmission method, all embodiments of the above-described information transmission method are applicable to the device, and can achieve the same or similar beneficial effects.

At least one embodiment of the present disclosure also provides a network device including a transceiver and a processor. The transceiver is configured to receive first information sent by the UE, wherein the first information is configured to indicate information related to CHO and/or a first operation; the first operation is: CPA and/or CPC.

Optionally, the first information includes at least one of the following:
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) includes at least one of:
   at least one event corresponding to the first operation of at least one PSCell or SCG corresponding to the first PCell or the first MCG, which is fulfilled before or when the CHO event(s) for the first PCell or the first MCG is fulfilled; or
   at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

Optionally, the transceiver is configured to: send request information to a UE, wherein the request information is used for the network device to request the UE to send the first information; and receive the first information sent by the UE according to the request information.

Optionally, the transceiver is further configured to receive second indication information sent by the UE, wherein the second indication information is configured to indicate that the UE has the first information.

Optionally, the transceiver is configured to receive the first information sent by the UE through a target message, wherein the target message includes at least one of a radio resource reestablishment request message, a radio link failure report, or a first information reporting message.

Optionally, the processor is configured to perform optimization of configuration of the CHO and/or the first operation according to the first information.

Optionally, the processor is configured to implement at least one of: adjusting at least one parameter of the CHO and/or first operation events according to an order of fulfilment of the CHO and first operation events and/or time between the fulfilment of the CHO and first operation events; if there is at least one PSCell for which the first operation is triggered before the CHO is triggered, reducing a number of candidate PScells, adjusting a threshold of the event(s) corresponding to the first operation, and/or adjusting a threshold of the event(s) corresponding to the CHO; or if there is a candidate PCell for which the associated first operation is triggered before the CHO is triggered, adjusting the at least one parameter of the event(s) corresponding to the first operation..

Optionally, the processor is configured to determine a configuration node for the CPC, and the transceiver sends information related to the CPC in the first information to the configuration node.

As shown in FIG. 6, an embodiment of the present invention further provides a network device including a processor 600, a transceiver 610, a memory 620, and a program stored in the memory 620 and executable by the processor 600. The transceiver 610 is connected to the processor 600 and the memory 620 through a bus interface. The processor 600 is configured to read the program in the memory, to enable the transceiver 610 to receive first information sent by the UE. The first information is used to indicate information related to CHO and/or the first operation. The first operation is: CPA and/or CPC.

The transceiver 610 is configured to receive and send data under the control of the processor 600.

In FIG. 6, the bus architecture may include any number of interconnected buses and bridges, specifically linked together by one or more processors represented by processor 600 and various circuits of memory represented by memory 620. The bus architecture may also link together various other circuits, such as peripherals, voltage regulators, and power management circuits, which are well known in the art and, therefore, will not be further described herein. The bus interface provides the interface. The transceiver 610 may be a plurality of elements, i.e., including a sendter and a receiver, providing means for communicating with various other devices over transmission media including wireless channels, wired channels, optical cables, and the like.

The processor 600 is responsible for managing the bus architecture and general processing, and the memory 620 may store data used by the processor 600 in performing operations.

Alternatively, the processor 600 may be a CPU (Central Processing Unit), an ASIC (Application Specific Integrated Circuit), an FPGA (Field-Programmable Gate Array), or a CPLD (Complex Programmable Logic Device), and the processor may adopt a multi-core architecture.

The processor, by calling a computer program stored in the memory, is configured to perform any of the methods according to embodiments of the present disclosure based on the obtained executable instructions. The processor and the memory may also be arranged physically separately.

Optionally, the first information includes at least one of the following:
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) includes at least one of:
   at least one event corresponding to the first operation of at least one PSCell or SCG corresponding to the first PCell or the first MCG, which is fulfilled before or when the CHO event(s) for the first PCell or the first MCG is fulfilled; or
   at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

Optionally, the processor 600 is configured to read the program in the memory, to enable the transceiver 610 to send request information to the UE, wherein the request information is used for the network device to request the UE to send the first information;
Receiving the first information sent by the UE according to the request information.

Optionally, the processor 600 is configured to read the program in the memory, to enable the transceiver 610 to receive second indication information sent by the UE, wherein the second indication information is configured to indicate that the UE has the first information.

Optionally, the processor 600 is configured to read the program in the memory, to enable the transceiver 610 to receive the first information sent by the UE through a target message, wherein the target message includes at least one of a radio resource reestablishment request message, a radio link failure report, or a first information reporting message.

Optionally, the processor 600 is configured to read the program in the memory, and further perform optimization of configuration of the CHO and/or the first operation according to the first information.

Optionally, the processor 600 is configured to read the program in the memory and perform at least one of the following processes: adjusting at least one parameter of the CHO and/or first operation events according to an order of fulfilment of the CHO and first operation events and/or time between the fulfilment of the CHO and first operation events; if there is at least one PSCell for which the first operation is triggered before the CHO is triggered, reducing a number of candidate PScells, adjusting a threshold of the event(s) corresponding to the first operation, and/or adjusting a threshold of the event(s) corresponding to the CHO; or if there is a candidate PCell for which the associated first operation is triggered before the CHO is triggered, adjusting the at least one parameter of the event(s) corresponding to the first operation..

Optionally, the processor 600 is configured to read the program in the memory, and further perform the following process: determining a configuration node for the CPC, and sending information related to CPC in the first information to the configuration node.

At least one embodiment of the present disclosure further provides a network device including a memory, a processor, and a computer program stored in the memory and executable by the processor. When the processor executes the program, each process in the embodiment of the information transmission method can be realized, and the same technical effect can be achieved. In order to avoid repetition, the description will not be repeated here.

At least one embodiment of the present disclosure further provides a computer-readable storage medium, in which a computer program is stored. When the program is executed by a processor, it implements each process in the above-described embodiments of the information transmission method and can achieve the same technical effects. To avoid repetition, details are not repeated here. The aforementioned computer-readable storage medium includes, for example, a Read-Only Memory (ROM), a Random Access Memory (RAM), a magnetic disk, or an optical disc.

It should be noted that, in this document, the terms "comprises", "comprising" or any other variants thereof are intended to cover non-exclusive inclusion, such that a process, method, article or device including a series of elements not only includes those elements, but also includes other elements not explicitly listed, or further includes elements inherent to such a process, method, article or device. Without more restrictions, an element defined by the phrase "comprises a..." does not exclude the existence of additional identical elements in the process, method, article or device that includes the element. In addition, it should be pointed out that the scope of the methods and devices in the embodiments of the present disclosure is not limited to performing functions in the order shown or discussed; they may also perform functions in a substantially simultaneous manner or in the reverse order according to the involved functions. For example, the described methods may be executed in an order different from that described, and various steps may also be added, omitted, or combined. In addition, features described with reference to certain examples may be combined in other examples.

From the description of the above embodiments, those skilled in the art can clearly understand that the methods in the above embodiments can be implemented by means of software plus a necessary general hardware platform; of course, they can also be implemented by hardware, but in many cases, the former is a better implementation. Based on this understanding, the technical solution of the present disclosure, in essence or the part that contributes to the existing technology, can be embodied in the form of a software product. The computer software product is stored in a storage medium (such as ROM/RAM, magnetic disk, optical disc) and includes several instructions to enable a UE (which may be a mobile phone, a computer, a server, an air conditioner, a network device, etc.) to execute the methods described in the various embodiments of the present disclosure.

The embodiments of the present disclosure have been described above with reference to the accompanying drawings, but the present disclosure is not limited to the above specific implementations. The above specific implementations are merely illustrative rather than restrictive. Under the inspiration of the present disclosure, those of ordinary skill in the art can make many forms without departing from the purpose of the present disclosure and the scope protected by the claims, all of which fall within the protection scope of the present disclosure.

## Claims

1. An information transmission method, performed by a user equipment (UE), the method comprising:
sending first information to a network device, wherein the first information is used to indicate information related to Conditional Handover (CHO) and/or a first operation, and the first operation is Conditional PSCell Addition (CPA)/Conditional PSCell Change (CPC).

2. The method of claim 1, wherein the first information comprises at least one of:
an order of fulfilment of the CHO and first operation events;
time between fulfilment of the CHO and first operation events;
at least one target event;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) comprises at least one of:
at least one event corresponding to the first operation of at least one PSCell or SCG corresponding to the first PCell or the first MCG, which is fulfilled before or when the CHO event(s) for the first PCell or the first MCG is fulfilled; or
at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

3. The method of claim 1 or 2, wherein the sending first information to the network device comprises:
receiving request information of the network device, wherein the request information is used for the network device to request the UE to send the first information; and
sending the first information to the network device according to the request information.

4. The method of claim 3, wherein before receiving request information of the network device, the method further comprises:
sending second indication information to the network device, wherein the second indication information is used to indicate that the UE has the first information.

5. The method of claim 1 or 2, wherein the sending first information to a network device comprises:
sending the first information to the network device through a target message, wherein the target message comprises at least one of a radio resource reestablishment request message, a radio link failure report, or a first information report message.

6. The method of claim 1 or 2, wherein before sending the first information to the network device, the method further comprises:
receiving report configuration information of the first information, wherein the report configuration information comprises an indication of collecting or recording the first information.

7. The method of claim 6, wherein the report configuration information further comprises a report condition of the first information, wherein the reporting condition comprises a threshold of time between fulfilment of the CHO and first operation events.

8. The method of claim 6, wherein receiving report configuration information of the first information comprises:
receiving report configuration information of the first information sent by a network management device, a trace collection entity, or the network device.

9. An information transmission method, performed by a network device, the method comprising:
receiving first information sent by a user equipment (UE), wherein the first information is used to indicate information related to Conditional Handover (CHO) and/or a first operation, and the first operation is Conditional Primary and Secondary Cell Addition (CPA) and/or Conditional Primary and Secondary Cell Change (CPC).

10. The method of claim 9, wherein the first information comprises at least one of:
an order of fulfilment of the CHO and first operation events;
time between fulfilment of the CHO and first operation events;
one or more target events;
identification information of at least one candidate PSCell corresponding to the target event(s);
identification information of a candidate PCell corresponding to the target event(s);
an order in which the target events are fulfilled;
time between fulfilment of the target events;
time between fulfilment of the target event(s) and the CHO event(s) for the first PCell or the first MCG;
first indication information, where the first indication information is used to indicate fulfilment of the target event(s);
a cell identifier of a candidate PCell corresponding to the CHO;
a cell identifier of a candidate PSCell corresponding to the first operation;
at least one event corresponding to fulfilment of the CHO and/or the first operation; or
a configuration node for CPC;
wherein the target event(s) comprises at least one of:
at least one event corresponding to the first operation of at least one PSCell or SCG corresponding to the first PCell or the first MCG, which is fulfilled before or when the CHO event(s) for the first PCell or the first MCG is fulfilled; or
at least one event corresponding to the first operation of a PSCell or SCG, which is fulfilled before or when the CHO event(s) for the first PCell or the first MCG is fulfilled, wherein the PSCell or SCG for the first operation that is fulfilled corresponds to the second PCell or the second MCG.

11. The method of claim 9 or 10, wherein receiving the first information sent by the UE comprises:
sending request information to a UE, wherein the request information is used for the network device to request the UE to send the first information; and
receiving the first information sent by the UE according to the request information.

12. The method of claim 11, wherein before sending the request information to the UE, the method further comprises:
receiving second indication information sent by the UE, wherein the second indication information is used to indicate that the UE has the first information.

13. The method of claim 9 or 10, wherein receiving the first information sent by the UE comprises:
receiving the first information sent by the UE through a target message, wherein the target message comprises at least one of a radio resource reestablishment request message, a radio link failure report, or a first information report message.

14. The method of any one of claims 9-13, further comprising:
performing, according to the first information, optimization of configuration of the CHO and/or the first operation.

15. The method of claim 14, wherein performing, according to the first information, optimization of configuration of the CHO and/or the first operation comprises at least one of:
adjusting at least one parameter of the CHO and/or first operation events according to an order of fulfilment of the CHO and first operation events and/or time between the fulfilment of the CHO and first operation events;
if there is at least one PSCell for which the first operation is triggered before the CHO is triggered, reducing a number of candidate PScells, adjusting a threshold of the event(s) corresponding to the first operation, and/or adjusting a threshold of the event(s) corresponding to the CHO; or
if there is a candidate PCell for which the associated first operation is triggered before the CHO is triggered, adjusting the at least one parameter of the event(s) corresponding to the first operation.

16. The method of any one of claims 9-13, further comprising:
determining a configuration node for the CPC, and
sending information related to the CPC in the first information to the configuration node.

17. An information transmission apparatus, applied to a user equipment (UE), the apparatus comprising:
a first sending module, configured to send the first information to a network device;
wherein the first information is used to indicate information related to Conditional Handover (CHO) and/or a first operation, and the first operation is Conditional PSCell Addition (CPA)/Conditional PSCell Change (CPC).

18. A user equipment (UE), comprising:
a transceiver; and
a processor;
wherein the transceiver is configured to send first information to a network device, wherein the first information is used to indicate information related to Conditional Handover (CHO) and/or a first operation, and the first operation is Conditional PSCell Addition (CPA)/Conditional PSCell Change (CPC).

19. A user equipment (UE), comprising:
a memory,
a processor, and
a computer program stored in the memory and executable by the processor,
wherein the processor, when executing the program, is configured to implement the method of any one of claims 1-8.

20. An information transmission apparatus, applied to a network device, the apparatus comprising:
a first receiving module, configured to receive first information sent by a User Equipment (UE),
wherein the first information is used to indicate information related to Conditional Handover (CHO) and/or a first operation, and the first operation is Conditional PSCell Addition (CPA)/Conditional PSCell Change (CPC).

21. A network device comprising
a transceiver; and
a processor;
wherein the transceiver is configured to receive first information sent by a User Equipment (UE), wherein the first information is used to indicate information related to Conditional Handover (CHO) and/or a first operation, and the first operation is Conditional PSCell Addition (CPA)/Conditional PSCell Change (CPC).

22. A network device, comprising:
a memory,
a processor, and
a computer program stored in the memory and executable by the processor,
wherein the processor, when executing the program, is configured to implement the method of any one of claims 9-16.

23. A readable storage medium having stored thereon a computer program, wherein the program, when executed by a processor, implements the method of any one of claims 1-16.

24. A computer program product, comprising instructions, wherein the instructions, when executed by a processor, cause the processor to perform the method of any one of claims 1-16.
